# EUROPÄISCHE PATENTSCHRIFT

(11) **EP 2 844 813 B1**
(45) Veröffentlichungstag und Bekanntmachung des Hinweises auf die Patenterteilung: **21.09.2016**
(21) Anmeldenummer: 13734312.5
(22) Anmeldetag: 19.04.2013
(51) Int. Cl.: E05C 17/00, E05D 11/10, E05F 5/02, F16F 9/18

(54) **TÜRFESTSTELLER FÜR EINE TÜR ODER KLAPPE EINES KRAFTFAHRZEUGS**
DOOR OR COVER HOLDER FOR VEHICLE
ARRÊT DE PORTE OU DE CLAPET POUR VEHICULES

(30) Priorität: 02.05.2012 DE 102012207272
(43) Veröffentlichungstag der Anmeldung: 11.03.2015
(73) Patentinhaber: Kiekert Aktiengesellschaft, 42579 Heiligenhaus (DE)
(72) Erfinder: INAN, Ömer, 46282 Dorsten (DE); SCHIFFER, Holger, 40668 Meerbusch (DE); SCHÖNENBERG, Thomas, 51399 Burscheid (DE)
(74) Vertreter: Gille Hrabal
(86) Internationale Anmeldenummer: PCT/DE2013/000212
(87) Internationale Veröffentlichungsnummer: WO 2013/163975

(56) Entgegenhaltungen:
- WO-A2-92/08028
- DE-A1- 4 305 246
- DE-A1- 10 046 722
- DE-A1- 19 938 306
- DE-A1-102009 059 882
- DE-C1- 4 239 172
- DE-U1- 9 402 400
- GB-A- 2 347 732

## Beschreibung

Die vorliegende Erfindung betrifft einen Türfeststeller insbesondere für ein Kraftfahrzeug mit einem Ventil.

Wird eine Tür eines Kraftfahrzeugs geöffnet, so gibt es regelmäßig geöffnete Stellungen der Tür, in denen die Tür durch einen Türfeststeller in seiner geöffneten Stellung oder Position gehalten wird. Es ist dann ein erhöhter Kraftaufwand erforderlich, um eine Tür aus einer solchen gehaltenen Stellung heraus zu bewegen. In der Regel gibt es zwei verschiedene Stellungen, in denen eine Tür eines Kraftfahrzeugs im geöffneten Zustand durch einen Türfeststeller gehalten wird. In der einen Position, nachfolgend auch Zwischenstellung genannt, ist die dann zur Verfügung stehende Einstiegsöffnung relativ klein und die Tür nur halb geöffnet. In der anderen Position ist die Einstiegsöffnung maximal groß oder nahezu maximal groß. Die Tür ist dann vollständig oder nahezu vollständig geöffnet.

Es besteht Bedarf, eine Tür eines Kraftfahrzeugs in einer Zwischenstellung halten zu können, beispielsweise wenn aufgrund eines benachbart parkenden Fahrzeugs oder aufgrund einer Wand ein vollständiges Öffnen der Tür und ein damit verbundenes Maximieren der Einstiegsöffnung verhindert wird. Da es unerwünscht ist, die Tür gegen eine solche Wand oder ein benachbartes Fahrzeug zu bewegen, was mit Beschädigungen einhergehen könnte, gibt es eine Zwischenstellung, in der die Tür durch den Türfeststeller gehalten wird. Es steht dann allerdings eine relativ kleine Öffnung für ein Aussteigen oder Einsteigen zur Verfügung. Dies ist unbequem.

Aus der DE 198 55 710 A1 geht eine Türarretierung, also ein Türfeststeller für ein Kraftfahrzeug hervor, der eine Tür im Anschluss an ein Öffnen stufenlos festzuhalten vermag, um so Einstiegsöffnungen in Abhängigkeit von äußeren Begrenzungen wie Wand oder benachbartes Fahrzeug maximieren zu können. Der Türfeststeller umfasst einen in einem Gehäuse verschwenkbaren Kolben, der einen geschlossenen, mit einer Flüssigkeit gefüllten Raum in zwei Kammern trennt sowie Richtungsventile, die bei einem voreingestellten Schwellwert ansprechen. Spricht ein Richtungsventil an, so kann Flüssigkeit von einer Kammer in die andere Kammer fließen und eine zugehörige Tür bewegt werden.

Hydraulische Türfeststeller sind, zwar in verschiedenen Ausführungsformen, aber im Prinzip bekannt, z. B. aus DE 94 02 400 U1, WO 92/08028 A2, DE 199 38 306 A1 sowie DE 42 39 172 C1.

10 Es ist Aufgabe der Erfindung, ein Ventil für einen derartigen Türfeststeller zur Verfügung zu stellen, welches ein Bewegen einer Tür mit geringem Kraftaufwand ermöglicht.

Zur Lösung der Aufgabe wird ein Türfeststeller umfassend ein Ventil mit den Merkmalen des ersten Anspruchs bereitgestellt. Vorteilhafte Ausgestaltungen ergeben sich aus den Unteransprüchen.

Das Ventil für den beanspruchten Türfeststeller weist eine Einrichtung für ein Öffnen des Ventils auf, welche so beschaffen ist, dass für ein anfängliches Öffnen des Ventils zunächst ein relativ hoher Öffnungsdruck auf das Ventil ausgeübt werden muss. Im Anschluss daran muss für ein vollständiges Öffnen des Ventils und / oder für ein Halten des Ventils in seiner geöffneten Stellung ein im Vergleich dazu geringerer Öffnungsdruck auf das Ventil ausgeübt werden.

Da bei einem solchen Ventil anfänglich ein relativ hoher Öffnungsdruck für ein Öffnen des Ventils aufgewendet werden muss, ist zunächst ein relativ hoher Kraftaufwand erforderlich, um eine Tür zu bewegen, die durch einen mit einem solchen Ventil ausgestatteten Türfeststeller arretiert ist. Der Türfeststeller erfüllt in dieser Hinsicht aufgrund des Ventils folglich zuverlässig seinen Zweck, nämlich das Halten einer Tür im Ruhezustand. Wird die Tür bewegt und so ein Öffnungsdruck auf das Ventil ausgeübt, so öffnet das Ventil bei hinreichend hoher Kraft anfänglich. Ist das Ventil anfänglich geöffnet worden, so fällt der Druck ab, der für ein vollständiges Öffnen des Ventils im Anschluss daran aufgewendet werden muss und/ oder für das Halten des Ventils in seiner geöffneten Stellung erforderlich ist. Die Tür kann dann aufgrund des abfallenden Drucks mit reduziertem Kraftaufwand weiter bewegt werden. Ein mit einem solchen Ventil ausgestatteter Türfeststeller arretiert also vorteilhaft einerseits eine Tür zuverlässig und ermöglicht es andererseits, dass eine Tür schließlich mit geringem Kraftaufwand und damit komfortabel weiter bewegt werden kann.

"Weiter bewegen" meint, dass im Anschluss an ein durch Bewegen der zugehörigen Tür oder Klappe bewirktes anfängliches Öffnen die Bewegung der Tür oder Klappe fortgesetzt wird und zwar in gleicher Richtung, beispielsweise um die entsprechende Tür oder Klappe zu schließen oder zu öffnen.

Erfindungsgemäß umfasst die Einrichtung einen ersten Öffnungsmechanismus für einen ersten Ventilverschluss und einen zweiten Öffnungsmechanismus für einen zweiten Ventilverschluss. Für ein Öffnen des Ventils wird zunächst lediglich der erste Öffnungsmechanismus betätigt, um so den ersten Ventilverschluss zu öffnen. Ist der erste Öffnungsmechanismus betätigt worden, so wurde das Ventil anfänglich im Sinne der vorliegenden Erfindung geöffnet. Dieses anfängliche Öffnung schafft die Voraussetzung dafür, dass der zweite Öffnungsmechanismus für ein Öffnen des zweiten Ventilverschlusses betätigt werden kann. Dieser zweistufige Aufbau ermöglicht es, dass nur anfänglich eine relativ hohe Kraft aufgewendet werden muss, um das Ventil vollständig zu öffnen.

Ein Öffnungsmechanismus wird insbesondere durch einen Druck betätigt, der durch Zufluss von Flüssigkeit auf den Öffnungsmechanismus ausgeübt wird.

In einer Ausführungsform wird durch den ersten Öffnungsmechanismus ein Zufluss zum zweiten Öffnungsmechanismus geschaffen, indem der erste Öffnungsmechanismus betätigt wird. Ist der Zufluss geschaffen, so kann durch den Zufluss von Flüssigkeit zum zweiten Öffnungsmechanismus der zweite Ventilverschluss geöffnet werden. Grundsätzlich ist das Ventil mit dem Öffnen des zweiten Öffnungsmechanismus vollständig geöffnet worden, so dass nun Flüssigkeit durch das Ventil hindurch von einem Ventileinlass zu einem Ventilauslass fließen kann. Eine entsprechende Tür oder Klappe kann dann mit geringem Kraftaufwand weiter bewegt werden.

Vorzugsweise genügt die geöffnete Stellung des zweiten Ventilverschlusses, um eine entsprechende eine Tür oder Klappe mit geringem Kraftaufwand weiter bewegen zu können und zwar unabhängig von der Stellung des ersten Öffnungsmechanismus. Es muss dann keine Kraft für den ersten Öffnungsmechanismus aufgewendet werden, was den gewünschten Kraftverlauf ermöglicht.

Vorzugsweise muss für das Betätigen des ersten Öffnungsmechanismus eine höhere Kraft aufgewendet werden als für das Betätigen des zweiten Öffnungsmechanismus. Dies fördert die angestrebte Wirkung, dass anfänglich eine relativ hohe Kraft aufgewendet werden muss, um das Ventil zu öffnen, um so eine Tür oder Klappe zuverlässig arretieren zu können. Ist der erste Öffnungsmechanismus betätigt worden, so kann anschließend eine relativ geringe zweite Kraft genügen, um den zweiten Öffnungsmechanismus für das Weiterbewegen einer entsprechenden Tür oder Klappe zu betätigen und / oder den geöffneten Zustand des zweiten Ventilverschlusses aufrecht zu erhalten.

Der erste Öffnungsmechanismus umfasst in einer Ausführungsform einen ersten Ventilverschluss in Form eines ersten Kolbens. Der erste Kolben kann von einer schließenden Ausgangsstellung in eine geöffnete Stellung gebracht werden kann. Der zweite Öffnungsmechanismus umfasst in einer Ausführungsform einen zweiten Ventilverschluss in Form eines zweiten Kolbens, der von einer schließenden Ausgangsstellung in eine geöffnete Stellung gebracht werden kann. Befinden sich beide Ventilverschlüsse in ihrer schließenden Ausgangsstellung, so ist das Ventil vollständig geschlossen und eine entsprechende Tür oder Klappe ist arretiert. Befindet sich der zweite Ventilverschluss in seiner geöffneten Stellung, so ist es erfindungsgemäß möglich, eine zugehörige Tür oder Klappe mit geringem Kraftaufwand weiter bewegen zu können, und zwar insbesondere unabhängig von der Stellung des ersten Öffnungsmechanismus.

Vorzugsweise gibt es eine erste sowie zweite vorgespannte Feder, durch die ein jeder Öffnungsmechanismus bzw. das zugehörige Verschlusselement in seine geschlossene Stellung gebracht werden kann. Vorzugsweise muss der erste Öffnungsmechanismus gegen eine größere Federkraft betätigt werden, um den zugehörigen Ventilverschluss in seine geöffnete Stellung zu bringen im Vergleich zu dem zweiten Öffnungsmechanismus. Dies kann durch entsprechende Dimensionierung der Federn und / oder der jeweils eingestellten Vorspannung der Federn erreicht werden. Alternativ oder ergänzend kann dies erreicht werden, indem ein Ventilverschluss des ersten Öffnungsmechanismus gegen die Kraft der ersten und zweiten Feder für ein Öffnen bewegt werden muss, wohingegen ein Ventilverschluss des zweiten Öffnungsmechanismus nur gegen die Kraft der zweiten Feder für ein Öffnen bewegt werden muss. Es wirken also auf den ersten Ventilverschluss dann zwei Federn ein wohingegen auf den zweiten Ventilverschluss nur eine der beiden Federn einwirkt.

In einer Ausführungsform bewirkt das Bewegen des ersten Ventilverschlusses in seine geöffnete Stellung, dass der zweite Ventilverschluss in eine Zwischenstellung bewegt wird. Ist die Zwischenstellung erreicht, so ist bei dieser Ausführungsform ein Zufluss zum zweiten Ventilverschluss geöffnet worden. Diese Ausführungsform ermöglicht es, das Ventil vollständig zu öffnen und im geöffneten Zustand zu halten, ohne dann Kraft für den ersten Ventilverschluss aufwenden zu müssen. Es ist so möglich, eine zugehörige Tür oder Klappe mit besonders geringem Kraftaufwand weiter bewegen zu können.

In einer Ausführungsform weist der zweite Ventilverschluss einen größeren Durchmesser als der erste Ventilverschluss auf, um so eine größere Fläche zur Verfügung zu stellen, auf die eine Flüssigkeit für ein Öffnen des Verschlusses einwirken kann. Es kann so vorteilhaft erreicht werden, dass der zweite Ventilverschluss mit geringerer Kraft geöffnet werden kann im Vergleich zum ersten Ventilverschluss.

Ein Türfeststeller, für den ein anspruchsgemäßes Ventil vorgesehen ist, umfasst insbesondere einen verschwenkbaren Steuerhebel oder einen bewegbaren Kolben und zwar insbesondere einen linear bewegbaren Kolben, der einen geschlossenen, mit einer Flüssigkeit gefüllten Raum in zwei Kammern trennt. Der Türfeststeller umfasst ein, vorzugsweise zwei erfindungsgemäße Ventile, um Flüssigkeit bei Überschreiten eines voreingestellten Schwellwertes in einer Kammer in die andere Kammer gelangen zu lassen. Ein solcher Schwellwert bzw. Flüssigkeitsdruck in einer Kammer wird erreicht, indem eine zugehörige Tür oder Klappe bewegt und damit der Steuerhebel verschwenkt wird.

Bei Überschreiten einer hinreichend hohen Kraft, die auf eine zugehörige Tür oder Klappe für ein Bewegen der Tür oder Klappe ausgeübt wird, öffnet ein entsprechend gerichtetes Ventil. Umgekehrt schließt das Ventil wieder, wenn ein voreingestellter Wert unterschritten wird oder keine Kraft mehr auf das Ventil ausgeübt wird.

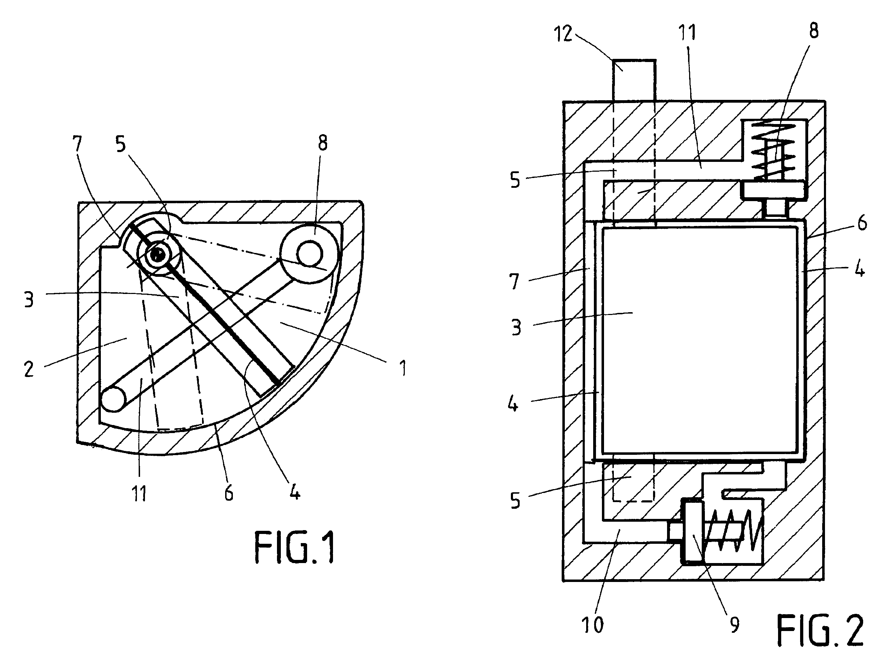

Nachfolgend wird anhand der Figuren 1 und 2 der grundsätzliche Aufbau eines Türfeststellers verdeutlicht. Anhand der Figuren 1 bis 3 wird ein bevorzugter Aufbau eines Ventils näher erläutert. Die dann erstmals genannten Merkmale können beliebig mit den Gegenständen der Ansprüche kombiniert werden, um zu weiter verbesserten Ausführungsformen zu gelangen.

### Es zeigen

- Figur 1:: Aufsicht auf Schnitt durch einen Türfeststeller
- Figur 2:: Seitenansicht auf Schnitt durch einen Türfeststeller
- Figur 3:: Ventil im geschlossenen Zustand in einer Schnittdarstellung,
- Figur 4:: Ventil im teilweise geöffneten Zustand,
- Figur 5:: Ventil im vollständig geöffneten Zustand.

Der in der Figur 1 im Schnitt gezeigte Türfeststeller umfasst einen Steuerhebel 3, der einen geschlossenen, mit einer Flüssigkeit gefüllten Raum in zwei Kammern 1 und 2 trennt. Insbesondere handelt es sich bei der Flüssigkeit um ein Öl, um Beschädigungen aufgrund von Reibung zu vermeiden. Eine Flüssigkeit ist kaum kompressibel und daher geeignet, um die gewünschte Haltewirkung für eine Tür oder Klappe erzielen zu können. Der Türsteller umfasst eine Einrichtung, die Flüssigkeit bei Überschreiten eines voreingestellten Drucks, der in der Kammer 1 auftritt, von der Kammer 1 in die andere Kammer 2 zu leiten vermag. Tritt in der Kammer 2 ein solcher erhöhter Druck auf, so wird die Flüssigkeit umgekehrt von der Kammer 2 in die Kammer 1 geleitet. Ein erhöhter Druck tritt dran auf, wenn die zugehörige Tür oder Klappe mit hinreichend hoher Kraft auf- oder zugedrückt und damit einhergehend der Steuerhebel 3 verschwenkt wird. Bei Unterschreiten dieser Kraft wird die Tür durch den Türfeststeller gehalten. Dies ist dann stufenlos möglich und zwar unabhängig davon, ob eine Tür geöffnet oder geschlossen wird.

Es gibt vorteilhaft wenigstens eine Dichtung 4, die für eine dichte Trennung der einen Kammer von der anderen Kammer sorgt. Eine solche Dichtung 4, die grundsätzlich aus einem elastischen Material besteht, so zum Beispiel aus einem Kautschukmaterial, trägt dazu bei, dass Flüssigkeit von einer Kammer 1 nicht in die Kammer 2 unplanmäßig aufgrund eines geringen Überdrucks in der Kammer 1 gelangen kann oder umgekehrt, was ein erwünschtes Halten einer Tür oder Klappe nachteilhaft beeinträchtigen würde.

Eine solche Dichtung 4 ist insbesondere umlaufend um den Steuerhebel 3 herum angebracht und an diesem befestigt. Wird der Steuerhebel 3 verschwenkt und zwar um seine Achse 5 herum, so liegt die Dichtung 4 stets umlaufend an den entsprechenden angrenzenden Wandbereichen des Raums 1, 2 an. Die Wände des Raums 1, 2 sind so an die Drehbewegung angepasst, dass die Dichtung jederzeit anliegt. In Aufsicht gesehen sind daher die Wandbereiche 6 und 7 vorzugsweise entsprechend gerundet Auch die entsprechenden, in Aufsicht gemäß Figur 1 gesehenen Endbereiche des Steuerhebels 3 sind vorteilhaft gerundet, um ein Verschwenken zu erleichtern.

Die Einrichtung umfasst vorzugsweise wenigstens ein in den Figuren 1 und 2 schematisch gezeigtes Überdruckventil, vorzugsweise zwei Überdruckventile 8 und 9, das bzw. die bei Überschreiten des voreingestellten Drucks für ein Überleiten der Flüssigkeit von einer Kammer in die andere öffnet. Wird der Steuerhebel 3 mit entsprechend großer Kraft verschwenkt, so öffnet also dann ein entsprechendes Ventil 8 oder 9, damit Flüssigkeit von der einen Kammer in die andere Kammer strömen kann, um so ein dann erwünschtes Verschwenken des Steuerhebels und damit ein Öffnen oder Schließen der Tür zu ermöglichen.

Wie in der Figur 2 dargestellt, kann ein solches Ventil 8, 9 an der Oberseite und/oder an der Unterseite des Raums 1, 2 angeordnet sein.

Aus Platzgründen ist vorteilhaft ein Ventil 8 auf der Oberseite angeordnet und das andere Ventil 9 an der Unterseite, um eine kompakte Bauweise zu ermöglichen. Ein solches Ventil 8, 9 kann aber auch in den Steuerhebel 3 integriert sein.

Vorzugsweise sind zwei Überströmkanäle 10, 11 vorhanden sind, durch die Flüssigkeit von einer Kammer 1 zu der anderen Kammer 2 oder umgekehrt bei Überschreiten eines voreingestellten Drucks in einer der beiden Kammern geleitet werden kann, wie die Figuren 1 und 2 verdeutlichen. Aus Platzgründen ist wiederum vorzuziehen, den einen Kanal 11 an der Oberseite anzuordnen und den anderen Kanal 10 an der Unterseite und zwar vom Steuerhebel 3 ausgesehen, wie in den Figuren 1 und 2 gezeigt wird.

Ein Ende, vorzugsweise beide Enden eines Überströmkanals münden wie in der Figur 1 verdeutlicht wird in einen Bereich einer jeden Kammer 1, 2 ein, in den der Steuerhebel 3 nicht oder zumindest nicht vollständig hinein geschwenkt werden kann. Dadurch kann sichergestellt werden, dass in jeder Phase bzw. jeder möglichen Stellung eine zugehörige Tür gehalten werden kann.

In der Figur 1 wird durch gestrichelte Umrisse verdeutlicht, wie der Steuerhebel 3 verschwenkt werden kann.

Der Steuerhebel ist vorzugsweise mit einer Anbindung 12 für eine Tür versehen, die aus dem geschlossenen, das heißt flüssigkeitsdicht abgeschlossenen Raum 1, 2 heraus führt. Eine Dichtung 4 läuft vorzugsweise um diese Anbindung 12 herum, um auch diesen Bereich aus den genannten Gründen besonders zuverlässig abzudichten, wie in der Figur 1 gezeigt wird. Außerdem wird dadurch unterstützt, dass keine Flüssigkeit durch die Öffnung nach außen gelangen kann, durch die die Anbindung 12 aus dem Raum 1, 2 heraus geleitet wird. Die Anbindung 12 wird vorzugsweise durch eine Verlängerung der Achse 5 realisiert, durch die der Steuerhebel 3 schwenkbar gelagert wird. Über die Anbindung 12 wirkt sich der Haltemechanismus des Türfeststellers auf eine angebundene Tür aus.

Es gibt grundsätzlich ein oder mehrere Dichtungen, die in der Regel aus einem elastischen Material bestehen, und die die Öffnung flüssigkeitsdicht abdichten, durch die die Anbindung 12 aus dem Raum 1, 2 herausgeführt ist, um so einen langlebigen und zuverlässigen Betrieb sicherzustellen.

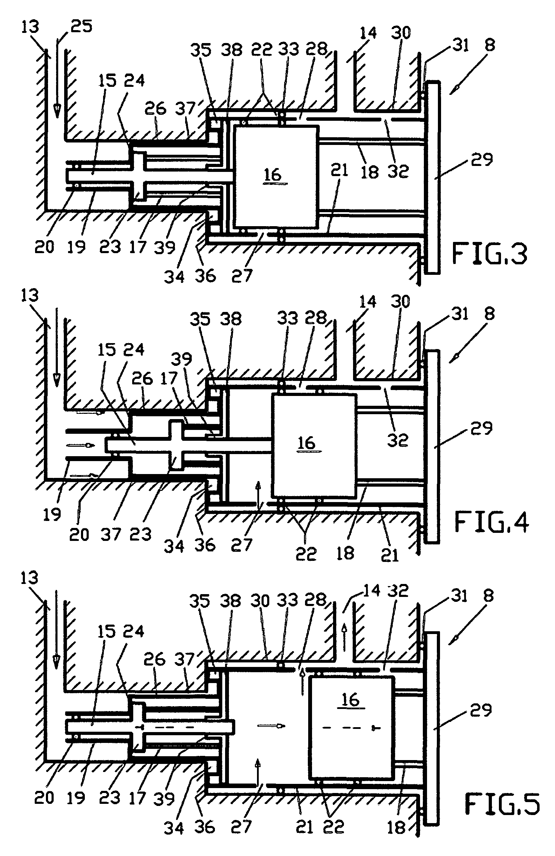

Die Figur 3 zeigt eine bevorzugte Ausführungsform eines Ventils 8 mit einer Einrichtung für ein Öffnen des Ventils, welche so beschaffen ist, dass für ein anfängliches Öffnen des Ventils zunächst ein relativ hoher Öffnungsdruck auf das Ventil ausgeübt werden muss und im Anschluss daran für ein vollständiges Öffnen des Ventils ein im Vergleich dazu geringerer Öffnungsdruck auf das Ventil ausgeübt werden muss. Die Figur 1 zeigt das Ventil im geschlossenen Zustand.

Das Ventil 8 weist einen Einlass 13 und einen Auslass 14 für Flüssigkeit auf. Flüssigkeit kann vom Einlass bzw. Eingang 13 zum Auslass bzw. Ausgang 14 fließen, wenn das Ventil 8 geöffnet ist. Ein umgekehrter Fluss durch das Ventil 8 hindurch ist nicht möglich.

Das Ventil 8 verfügt über einen ersten Kolben 15 und einen zweiten Kolben 16, die jeweils durch eine vorgespannte Feder 17, 18 in Richtung geschlossene Stellung gedrückt werden. Die beiden Kolben 15 und 16 können getrennt voneinander bewegt werden und sind also nicht miteinander fest verbunden. Vorzugsweise kann in der in der Figur 3 gezeigten Situation die erste Feder 17 auf den ersten Kolben 15 einen höheren Druck ausüben im Vergleich zu dem Druck, den die Feder 18 auf den zweiten Kolben 16 ausübt. Die Feder 17 ist vorzugsweise entsprechend stärker vorgespannt als die Feder 18 und / oder entsprechend stärker ausgeführt. Es wird so weiter verbessert die gewünschte Wirkung erzielt, dass also ein mit dem Ventil 8 versehener Türfeststeller einerseits im Ruhezustand eine Tür zuverlässig zu arretieren vermag und andererseits ein Bewegen einer zugehörigen Tür mit geringem Kraftaufwand möglich ist. Alternativ können beide Federn 17, 18 auch die gleiche Kraft auf die Kolben 15, 16 ausüben. Auch ist es möglich, dass die zweite Feder 18 einen höheren Druck ausübt als die Feder 17.

Der erste Kolben 15 wird in einem ersten Zylinder 19 geführt. Zumindest ein Kolbenring 20 dichtet den ersten Kolben 15 gegenüber der angrenzenden Zylinderwand des ersten Zylinders 19 ab. Der zweite Kolben 16 wird in einem zweiten Zylinder 21 geführt. Ein oder mehrere Kolbenringe 22 dichten den zweiten Kolben 16 gegenüber der angrenzenden Zylinderwand des zweiten Zylinders 21 ab. Das Vorsehen von 2 Kolbenringen 22 trägt dazu bei, ein Verkanten eines Kolbens 16 innerhalb seines Zylinders 21 zu vermeiden. Zwei Kolbenringe 22, die wie in den Figuren 3 bis 5 dargestellt mit Abstand zueinander angeordnet sind, führen also den zweiten Kolben 16 innerhalb seines Zylinders 21.

Ein jeder Kolbenring 20, 22 wird vorzugsweise durch eine entsprechende umlaufende Nut im zugehörigen Kolben 15, 16 gehalten. Ein Kolbenring 20, 22 kann aber auch anders mit seinem Kolben 15, 16 verbunden sein, so zum Beispiel stoffschlüssig, was aber im Vergleich zu einer formschlüssigen Verbindung nachteilig ist.

Der erste Kolben 15 weist einen umlaufenden Flansch 23 auf, der fest, so zum Beispiel einteilig mit dem ersten Kolben 15 verbunden ist. Im geschlossenen Zustand des Ventils 8 liegt der Flansch 23 an einem Anschlag 24 an und begrenzt so die Bewegungsmöglichkeit des ersten Kolbens 4 in Richtung geschlossene Stellung. Darüber hinaus dient der Flansch 23 als Auflage für die Feder 17, durch die der erste Kolben 15 in Richtung geschlossene Stellung gedrückt wird. Die erste Feder 17 liegt also auf dem Flansch 23 mit einem Ende auf und drückt so den ersten Kolben 15 in Richtung seiner schließenden Ausgangsstellung.

Im geschlossenen Zustand des Ventils 8 wird der zweite Kolben 16 aufgrund der zweiten Feder 18 gegen das hintere Ende des ersten Kolben 15 gedrückt. Die zweite Feder 18 liegt auf der Rückseite des Kolbens 16 auf.

Der zweite Kolben 16 weist vorzugsweise einen größeren Durchmesser als der erste Kolben 15 aus, umso weiter verbessert wegen "Druck = Kraft durchs Fläche" die gewünschten Wirkungen zu erzielen, also einerseits ein zuverlässiges Halten einer Tür und andererseits ein leichtes Weiterbewegen einer Tür.

Wird durch Öffnen einer entsprechenden Tür oder Klappe Flüssigkeit in Richtung des Pfeils 25 in den Einlass 13 hinein gedrückt, so wird dadurch der erste Kolben 15 und damit einhergehend auch der zweite Kolben 16 gegen die Kraft der Federn 17 und 18 gemeinsam in Richtung Öffnungsstellung verschoben, bis die in der Figur 2 gezeigte Zwischenstellung bzw. anfängliche Öffnungsstellung erreicht ist. Die dafür aufzuwendende Kraft ist relativ hoch, da die durch den ersten Kolben 15 dafür bereitgestellte Fläche klein ist und außerdem gegen die Kraft von zwei Federn 17 und 18 bewegt werden muss.

Ist die in der Figur 4 gezeigte Zwischenstellung erreicht worden, so kann Flüssigkeit vorzugsweise außen am inneren Gehäuse 26 vorbei, welches den ersten Kolben 15 umschließt, in eine Öffnung 27 des zweiten Zylinders 21 hinein fließen. Die in den zweiten Zylinder 21 durch die Öffnung 27 hinein fließende Flüssigkeit bewegt nun den zweiten Kolben 16 weiter in Richtung Öffnungsstellung und zwar nun nur noch gegen die kraft der zweiten Feder 18, bis die in der Figur 5 gezeigte geöffnete Stellung des Ventils 8 erreicht ist. Da der zweite Kolben 16 dafür ein entsprechend große Fläche bereitstellt, ist auch aus diesem Grund die Kraft gering die nun für ein Bewegen und Halten des zweten Kolbens 5 in Richtung Öffnungsstellung bzw. in der Öffnungsstellung aufgewendet werden muss.

In dieser in der Figur 5 gezeigten Öffnungsstellung gibt der zweite Kolben 16 eine weitere Öffnung 28 in der Seitenwand des zweiten Zylinders 21 frei und ermöglicht so einen Durchfluss von Flüssigkeit vom Einlass 13 durch die beiden Öffnungen 27 und 28 hindurch zum Auslass 14. Der erste Kolben 15 bewegt sich nun aufgrund der Kraft der ersten Feder 17 zurück in seine in der Figur 3 gezeigte schließende Ausgangsstellung. Die für ein Bewegen der Tür oder Klappe aufzuwendende Kraft muss nun nur noch so hoch sein, um den zweiten Kolben 16 gegen die Kraft der Feder 18 in seiner in der Figur 5 gezeigten geöffneten Stellung zu halten. Die für ein Weiterbewegen der Tür oder Klappe aufzuwendende Kraft ist daher in dieser Phase sehr gering im Vergleich zur anfänglichen Kraft, die ausgehend von der Figur 3 für ein anfängliches Öffnen des Ventils 1 ausgeübt werden muss. Ist die Tür also einmal in Bewegung versetzt worden, so ist die Kraft sehr gering, die für ein weiteres Bewegen der Tür oder Klappe in gleicher Richtung aufgewendet werden muss.

Die beschriebenen Komponenten des Ventils befinden sich in einem flüssigkeitsdicht durch einen Deckel 29 verschlossenen äußeren Gehäuse 30, das mit dem Einlass 13 und dem Auslass 14 versehen ist. Zu diesem Zweck befindet sich ein Dichtring 31 zwischen dem Deckel 29 und dem äußeren Gehäuse 30. Auf dem Deckel 29 liegt ein Ende der zweiten Feder 18 an.

Bevorzugt gibt es eine Öffnung 32 im zweiten Zylinder 21, die einen Flüssigkeitsaustausch in dem Raumbereich ermöglicht. In dem sich die zweite Feder 18 befindet. Die Kolbenringe 22 dichten den zweiten Kolben 16 flüssigkeitsdicht gegenüber der angrenzenden Zylinderwand ab. Zum Beispiel wird in der in der Fig. 3 dargestellten geschlossenen Stellung die Öffnung 27 mittels der Kolbenringe abgedichtet.

Ein Dichtring 33 befindet sich dicht zwischen dem zweiten Zylinder 21 und der angrenzenden Wand des äußeren Gehäuses 30. Dieser Dichtring 33 trägt dafür Sorge, dass zu der Öffnung 27 fließende Flüssigkeit nicht außen am zweiten Zylinder 21 vorbei ungehindert zum Auslass 14 gelangen kann. Der Dichtring 33 ist zwischen den beiden Öffnungen 27 und 28 angeordnet, die den Fluss vom Einlass 13 zum Auslass 14 hin ermöglichen.

Um einen Fluss von Flüssigkeit um das innen liegende Gehäuse 26 herum in Richtung Öffnung 27 zu erleichtern, ist ein Ringspalt 34 beim vom Deckel 29 abgewandten Ende des Zylinders 21 vorgesehen, der durch einen umlaufenden Gehäusevorsprung 35 des Zylinders 21 gebildet wird. Durch den Gehäusevorsprung 35 führen ein oder mehrere, nicht dargestellte Durchlässe hindurch. Der Gehäusevorsprung 35 liegt an einer Stufe 36 des äußeren Gehäuses 21 auf. Zwischen dem inneren Gehäuse 26 und dem äußeren Gehäuse 30 verbleibt ein zylinderförmiger Spalt 37, der ein Fließen von Flüssigkeit zum Ringspalt 34 ermöglicht. Eine Trennwand 38 trennt den Innenraum des zweiten Zylinders 21 vom Innenraum, der durch das innere Gehäuse 26 gebildet wird. Da bei dem gezeigten Ausführungsbeispiel der erste Kolben 15 mit nur einem Kolbenring 20 versehen ist, gibt es vorzugsweise eine zusätzliche Führung insbesondere in Form eines Zylinders 39, die im Zusammenspiel mit dem Kolbenring 20 dafür Sorge trägt, dass der Kolben 15 linear verschiebbar gelagert ist, ohne dass ein Verkanten zu befürchten steht. Die Führung 39 ist insbesondere mit der Trennwand 28 verbunden und zwar beispielsweise einteilig. Bevorzugt ragt auch in der in der Figur 1 gezeigten Ausgangsstellung ein Ende des ersten Kolbens 15 durch die Trennwand 38 hindurch, damit die auf den zweiten Kolben 16 wirkende Feder 18 zuverlässig in dieser Stellung dazu beiträgt, eine Tür zu arretieren.

Die Steuerung des Durchflusses einer Flüssigkeit wird auch aufgrund der wie dargestellt und beschrieben Querschnitte und Federkräfte erreicht. Das Ventil kann als Modul gebaut sein, welches in einen Türfeststeller eingesetzt wird.

### Bezugszeichenliste

- 1:: Kammer
- 2:: Kammer
- 3:: Steuerhebel
- 4:: Dichtung
- 5:: Achse
- 6:: Wandbereich
- 7:: Wandbereich
- 8:: Überdruckventil
- 9:: Überdruckventil
- 10:: Überströmkanal
- 11:: Überströmkanal
- 12:: Anbindung für Tür oder Klappe
- 13:: Ventileinlass
- 14:: Ventilauslass
- 15:: erster Kolben
- 16:: zweiter Kolben
- 17:: erste Feder
- 18:: zweite Feder
- 19:: erster Zylinder
- 20:: Kolbenring
- 21:: zweiter Zylinder
- 22:: Kolbenring
- 23:: Flansch
- 24:: Anschlag für Flansch
- 25:: Fließrichtung in das Ventil hinein
- 26:: inneres Gehäuse für ersten Kolben
- 27:: Zuflussöffnung in den zweiten Zylinder hinein
- 28:: Auslassöffnung aus dem zweiten Zylinder heraus
- 29:: Deckel, Kappe
- 30:: äußeres Ventilgehäuse
- 31:: Dichtring
- 32:: Öffnung im zweiten Zylinder
- 33:: Dichtring
- 34:: Ringspalt
- 35:: Gehäusevorsprung
- 36:: Gehäusestufe
- 37:: zylinderförmiger Spalt
- 38:: Trennwand
- 39:: Führung für ersten Kolben

## Patentansprüche

1. Türfeststeller für eine Tür oder Klappe eines Kraftfahrzeugs umfassend ein Ventil (8) und eine Einrichtung für ein Öffnen des Ventils (8), welche so beschaffen ist, dass für ein anfängliches Öffnen des Ventils (8) zunächst eine relativ hohe öffnende Kraft auf das Ventil ausgeübt werden muss und im Anschluss an ein anfängliches Öffnen für ein vollständiges Öffnen des Ventils (8) und/ oder für das Halten des Ventils (8) in seiner geöffneten Stellung eine im Vergleich dazu geringere Kraft auf das Ventil (8) ausgeübt werden muss, wobei die Einrichtung einen ersten Ventikverschluss (15) eines ersten Öffnungsmechanismus umfasst, durch den ein Öffnen eines zweiten Ventilverschlusses (16) in eine geöffnete Stellung ermöglicht werden kann, wobei in der geöffneten Stellung des zweite Ventilverschlusses (16) möglich ist, die zugehörige Tür oder Klappe mit geringem Kraftaufwand weiter bewegen zu können **dadurch gekennzeichnet, dass** unabhängig von der Stellung des ersten Öffnungsmechanismus die zugehörige Tür oder Klappe bewegt werden kann.

2. Türfeststeller nach dem vorhergehenden Anspruch, **dadurch gekennzeichnet, dass** dieses so beschaffen ist, dass für das Öffnen des ersten Ventilverschlusses (15) eine höhere Kraft aufgewendet werden muss als für das Öffnen des zweiten Ventilverschlusses (16).

3. Türfeststeller nach einem der beiden vorhergehenden Ansprüche, **dadurch gekennzeichnet, dass** der erste Ventilverschluss ein erster Kolben (15) ist, der von einer schließenden Ausgangsstellung in eine geöffnete Stellung gebracht werden kann und/ oder der zweite Ventilverschluss ein zweiter Kolben (16) ist, der von einer schließenden Ausgangsstellung in eine geöffnete Stellung gebracht werden kann.

4. Türfeststeller nach einem der drei vorhergehenden Ansprüche, **dadurch gekennzeichnet, dass** der erste Ventilverschluss (15) gegen die Kraft einer ersten und/ oder einer zweiten Feder (17, 18) bewegt werden muss, um für ein Öffnen des Ventils (8) von einer Ausgangsstellung in seine Öffnungsstellung gebracht zu werden.

5. Türfeststeller nach einem der vier vorhergehenden Ansprüche, **dadurch gekennzeichnet, dass** der zweite Ventilverschluss (16) gegen die Kraft einer zweiten Feder (18) bewegt werden muss, nicht aber gegen die Kraft einer weiteren Feder, um für ein Öffnen des Ventils (8) von einer schließenden Ausgangsstellung in seine Öffnungsstellung gebracht zu werden.

6. Türfeststeller nach einem der fünf vorhergehenden Ansprüche, **dadurch gekennzeichnet, dass** dieses so beschaffen ist, dass das Bewegen des ersten Ventilverschlusses (15) in seine geöffnete Stellung zugleich den zweiten Ventilverschluss (16) in eine Zwischenstellung bewegt, wobei hierdurch ein Zufluss (27) zum zweiten Ventilverschluss (16) geöffnet wird.

7. Türfeststeller nach dem vorhergehenden Anspruch, **dadurch gekennzeichnet, dass** in der geschlossenen Stellung des Ventils (8) der zweite Ventilverschluss (16) gegen den ersten Ventilverschluss (15) gedrückt wird.

8. Türfeststeller nach einem der fünf vorhergehenden Ansprüche, **dadurch gekennzeichnet, dass** der Durchmesser des zweiten Ventilverschlusses (16) größer als der Durchmesser des ersten Ventilverschlusses (15) ist.

9. Türfeststeller insbesondere für ein Halten einer Tür (17) eines Kraftfahrzeugs mit einem verschwenkbaren Steuerhebel (3) oder einem insbesondere linear bewegbaren Kolben, der einen geschlossenen, mit einer Flüssigkeit gefüllten Raum in zwei Kammern (1, 2) trennt und einer Einrichtung, die Flüssigkeit bei Überschreiten eines voreingestellten Drucks von einer Kammer in die andere Kammer zu leiten vermag, umfassend wenigsten ein Ventil (8) mit den Merkmalen nach einem der vorhergehenden Ansprüche.

## Claims

1. A door or cover holder for vehicle comprising a valve (8) and a device to open the valve (8), which is designed such that, for the initial opening of the valve (8) a relatively strong opening force is required to be applied first and, following initial opening, to completely open the valve (8) and/or to maintain the valve (8) in its open position, a force comparatively weaker is required to be applied to the valve, **characterized in that** the device comprises a first opening (15) having a first opening mechanism by way of which opening a second valve lock (16) toward an open position can be permitted, wherein, in the open position of the valve lock (16), it is possible to be able to continue movement of the associated door or the holder with lower effort, **characterized in that** the associated door or holder can be moved independently of the position of the opening mechanism.

2. The door holder according to the preceding claim, **characterized in that** it is designed such that in order to open the first valve lock (15) a force higher than for opening the second valve lock (16) is required to be used.

3. The door holder according on of the two preceding claims, **characterized in that** the first valve lock is a first piston (15), which may be brought from an initial closing position into an open position and/or the second valve lock is a second piston (16), which may be brought from an closing initial position into an open position.

4. The door holder according to one of the three preceding claims, **characterized in that** to open the valve (8) the first valve lock (15) is required to be moved against the force of a first spring and/or a second spring (17, 18) in order to be brought from an initial position into its opening position.

5. The door holder according to one of the four preceding claims, **characterized in that** the second valve lock (16) is required to be moved against the force of a second spring (18) in order to be brought from an initial position into its opening position.

6. The door holder according to one of the five preceding claims, **characterized in that** it is designed such that movement of the first valve lock (15) toward its opening position at the same time moves the second valve lock (16) toward an intermediate position, whereby a feed flow (27) to the second valve lock (16) will be opened.

7. The door holder according to the preceding claim, **characterized in that** in the closed position of the valve (8) the second valve lock (16) is pressed against the first valve lock (15).

8. The door holder according to one of the five preceding claims, **characterized in that** the diameter of the second valve lock (16) is larger than the diameter of the first valve lock (15).

9. A door holder especially for holding a door (17) of a vehicle having a control lever (3) or a piston particularly linearly moving, dividing a closed space filled with liquid into two chambers (1, 2), and having a device capable of guiding the liquid of one chamber into the other chamber when exceeding a preset pressure, comprising at least one valve (8) having the characteristics according to one of the preceding claims.

## Revendications

1. Arrêt de porte ou de clapet pour véhicules comprenant une soupape (8) et un appareillage afin d'ouvrir de la soupape (8), qui est aménagé tel que, pour une ouverture initiale de la soupape (8), il est nécessaire d'exercer d'abord une force d'ouverture relativement forte sur la soupape et, suite à une ouverture initiale, pour une ouverture complète de la soupape (8) et/ou pour le maintien de la soupape (8) dans sa position ouverte, il est nécessaire d'exercer une force comparativement plus faible sur la soupape, dans lequel l'appareillage comprend un premier verrouillage de soupape (15) d'un premier mécanisme d'ouverture, par lequel une ouverture d'un deuxième verrouillage de soupape (16) vers une position ouverte peut être permise, dans lequel, dans la position ouverte du deuxième verrouillage de soupape (16), il est possible de pouvoir continuer de déplacer la porte ou le clapet associé avec un faible effort, **caractérisé par le fait que** la porte ou le clapet associé peut être déplacé indépendamment de la position du premier mécanisme d'ouverture.

2. Arrêt de porte selon la revendication précédente, **caractérisé par le fait qu'**il est aménagé tel que pour l'ouverture du premier verrouillage de soupape (15 il est nécessaire d'utiliser une force plus haute que pour l'ouverture du deuxième verrouillage de soupape (16).

3. Arrêt de porte selon les deux revendications précédentes, **caractérisé par le fait que** le premier verrouillage de soupape est un premier piston (15), qui peut être amené d'une position initiale fermante à une position ouverte et/ou le deuxième verrouillage de soupape est un deuxième piston (16), qui peut être amené d'une position initiale fermante à une position ouverte.

4. Arrêt de porte selon l'une des trois revendications précédentes, **caractérisé par le fait que**, pour une ouverture de la soupape (8), le premier verrouillage de soupape (15) doit être écartée contre la force d'un premier ressort et/ou deuxième ressort (17, 18), afin d'être amenée d'une position initiale à sa position d'ouverture.

5. Arrêt de porte selon l'une des quatre revendications précédentes, **caractérisé par le fait que** le deuxième verrouillage de soupape (16) doit être écarté contre la force d'un deuxième ressort (18) afin d'être amenée d'une position initiale à sa position d'ouverture.

6. Arrêt de porte selon l'une des cinq revendications précédentes, **caractérisé par le fait que** celui-ci est aménagé tel que le déplacement du premier verrouillage de soupape (15) vers sa position d'ouverte en même temps déplace le deuxième verrouillage de soupape (16) vers une position intermédiaire, dans lequel de ce fait un afflux (27) vers le deuxième verrouillage de soupape (16) va être ouverte.

7. Arrêt de porte selon la revendication précédente, **caractérisé par le fait que** dans la position fermée de la soupape (8) le deuxième verrouillage de soupape (16) est appuyé sur le premier verrouillage de soupape (15).

8. Arrêt de porte selon l'une des cinq revendications précédentes, **caractérisé par le fait que** le diamètre du deuxième verrouillage de soupape (16) est supérieur au diamètre du premier verrouillage de soupape (15).

9. Arrêt de porte particulièrement pour retenir une porte (17) d'un véhicule avec un levier de command (3) ou un piston particulièrement linéairement mobile qui divise un espace fermé, rempli avec un liquide, en deux chambres (1, 2) et avec un appareillage capable de diriger du liquide d'une chambre à l'aufire chambre lors d'une franchissement d'une pression préréglée, comprenant au moins une soupape (8) ayant les caractéristiques selon l'une des revendications précédentes.
